# EUROPÄISCHE PATENTSCHRIFT

(11) **EP 0 695 251 B1**
(45) Veröffentlichungstag und Bekanntmachung des Hinweises auf die Patenterteilung: **01.10.1997**
(21) Anmeldenummer: 94915138.5
(22) Anmeldetag: 28.04.1994
(51) Int. Cl.: B60T 13/58, B60T 1/10, B60T 8/32

(54) **BREMSANLAGE FÜR KRAFTFAHRZEUGE MIT ELEKTRISCHEM ANTRIEB**
BRAKING SYSTEM FOR MOTOR VEHICLES WITH ELECTRIC DRIVE
SYSTEME DE FREINAGE POUR AUTOMOBILES A PROPULSION ELECTRIQUE

(30) Priorität: 03.05.1993 DE 4314448
(43) Veröffentlichungstag der Anmeldung: 07.02.1996
(73) Patentinhaber: ITT Automotive Europe GmbH, 60488 Frankfurt am Main (DE)
(72) Erfinder: FEIGEL, Hans-Jörg, D-61191 Rosbach v.d.H. (DE); GRÄBER, Johannes, D-65760 Eschborn (DE); KIRCHER, Dieter, D-61118 Bad Vilbel (DE); BERTHOLD, Thomas, D-64289 Darmstadt (DE)
(86) Internationale Anmeldenummer: EP9401341
(87) Internationale Veröffentlichungsnummer: WO9425322

(56) Entgegenhaltungen:
- EP-A- 0 361 708
- DE-A- 4 029 793
- US-A- 4 270 806

## Beschreibung

Die Erfindung betrifft eine Bremsanlage für Kraftfahrzeuge mit elektrischem Antrieb und einer angetriebenen und einer nicht angetriebenen Achse, bestehend aus
a) einem mittels eines Bremspedals betätigbaren zweikreisigen Hauptbremszylinder, an den sowohl auf die angetriebene als auch auf die nicht angetriebene Achse wirkende Reibungsbremsen angeschlossen sind;
b) einem elektro-regenerativen Bremssystem, das den elektrischen Antriebsmotor des Kraftfahrzeuges zur Abbremsung und Energierückgewinnung nutzt; sowie
c) einem elektronischen Regler, der Informationen über den Betätigungszustand des Hauptbremszylinders, den durch die Betätigung hervorgerufenen Bremsdruck und die Fahrzeuggeschwindigkeit erhält und zur Steuerung sowohl des Antriebsmotors als auch der auf die angetriebene Achse wirkenden Reibungsbremsen auswertet.

Eine derartige Bremsanlage für Elektrofahrzeuge ist zum Beispiel aus der US-A-4,270,806 bekannt. Bei der vorbekannten Bremsanlage stehen sämtliche Bremsen des Fahrzeuges mit einem als Druckgeber dienenden zweikreisigen Hauptbremszylinder in Verbindung, bei dessen Ausfall die angetriebene Fahrzeugachse lediglich vom Antriebsmotor gebremst werden kann. Die Bremswirkung des Antriebsmotors ist jedoch in manchen Fällen nicht ausreichend. Als weniger vorteilhaft anzusehen ist auch die Gefahr einer unregelmäßigen Abbremsung der beiden angetriebenen Räder, die auf eine Druckungleichheit, verursacht zum Beispiel durch eine bleibende Regelabweichung bei radindividueller Druckregelung oder durch eine Drift der Elektronik, beispielsweise aufgrund von Temperatureinflüssen, zurückzuführen ist.

Weiterhin ist aus der DE-A1-40 29 793 eine hydraulische Fremdkraft-Bremsanlage bekannt, die eine Servodruckquelle aufweist, die zum Ausüben einer Verstärkerfunktion sowie einer Blockeirschutz- und einer Antriebsschlupfbegrenzungsfunktion aktivierbar ist. Die bekannte Bremsanlage ist jedoch für Verwendungen bei Fahrzeugen mit elektromotorischem Antrieb weniger geeignet.

Es ist daher Aufgabe der vorliegenden Erfindung, die Betriebssicherheit der Bremsanlage der eingangs genannten Art zu erhöhen, indem bei einem Ausfall des pedalbetätigten Druckgebers eine ausreichende Bremswirkung gewährleistet ist.

Die Aufgabe wird erfindungsgemäß dadurch gelöst, daß die auf die nicht angetriebene Achse wirkenden Reibungsbremsen an den ersten Druckraum des Hauptbremszylinders und die auf die angetriebene Achse wirkenden Reibungsbremsen an den zweiten Druckraum des Hauptbremszylinders angeschlossen sind, wobei die Verbindung zwischen dem zweiten Druckraum und den auf die angetriebene Achse wirkenden Reibungsbremsen über mindestens ein elektrisch umschaltbares, stromlos offenes Sperrventil erfolgt und die auf die angetriebene Achse wirkenden Reibungsbremsen über elektrisch umschaltbare Druckregeleinheiten an eine hydraulische Energieversorgungseinheit bzw. Hilfsdruckquelle anschließbar sind. Durch diese Maßnahmen wird erreicht, daß bei einem Ausfall der Kraftfahrzeugelektrik bzw. -elektronik beide der angetriebenen Achse zugeordneten Reibungsbremsen, die nicht mehr elektrohydraulisch (break-by-wire) betätigbar sind, direkt durch den Fahrer betätigt werden können. Dabei muß die Gesamtanlage (Bremspedal, Tandemhauptzylinder, Radbremsen) entsprechend ausgelegt sein.

Eine vorteilhafte Weiterbildung des Erfindungsgegenstandes besteht darin, daß zwischen den auf die angetriebene Achse wirkenden Reibungsbremsen eine hydraulische Verbindung vorgesehen ist, die mittels eines zweiten, elektrisch umschaltbaren Sperrventils absperrbar ist. Das zweite Sperrventil ist dabei vorzugsweise als stromlos offenes (SO) - Ventil ausgeführt. Durch Schalten dieses Ventils ist eine radindividuelle Druckregelung, die in einem ABS- oder ASR-Fall notwendig ist, möglich. Wenn keine radindividuelle Druckregelung notwendig wird (Normalfall), wird durch das geöffnete zweite Sperrventil immer Druckgleichheit an beiden Radbremsen der angetriebenen Achse erreicht, so daß kein ungleichmäßiges Abbremsen der angetriebenen Räder durch Druckungleichheit möglich ist.

Bei einer weiteren vorteilhaften Ausgestaltung der Erfindung, bei der den hydraulischen Druck in den auf die angetriebene Achse wirkenden Reibungsbremsen erfassende Drucksensoren vorgesehen sind, sind die Drucksensoren an die zwischen den Reibungsbremsen und dem zweiten Sperrventil liegenden Abschnitte der hydraulischen Verbindung angeschlossen. Dadurch wird erreicht, daß beide Drucksensoren, die zur Druckregelung der Radbremsen der angetriebenen Achse verwendet werden, beim geöffneten zweiten Sperrventil in jedem Druckzustand gegenseitig überwacht werden können.

Dabei ist es besonders vorteilhaft, wenn auch die vorhin erwähnten Druckregeleinheiten an die zwischen den Reibungsbremsen und dem zweiten Sperrventil liegenden Abschnitte der hydraulischen Verbindung angeschlossen sind.

Um eine ABS-ASR-Regelung an der nicht angetriebenen Achse durchzuführen, sieht eine weitere vorteilhafte Variante des Erfindungsgegenstandes vor, daß die hydraulische Energieversorgungseinheit durch ein zweikreisiges Motor-Pumpen-Aggregat gebildet ist, dessen erster Kreis über eine hydraulische Ventilanordnung mit den auf die nicht angetriebene Achse wirkenden Reibungsbremsen verbindbar ist und dessen zweiter Kreis einerseits mit einem Hochdruckspeicher verbunden ist, der über je eine Druckregeleinheit an die auf die angetriebene Achse wirkenden Reibungsbremsen anschließbar ist.

Eine weitere Erhöhung der Qualität der Druckregelung an der angetriebenen Achse wird bei einer weiteren Ausführungsvariante der Erfindung dadurch erreicht, daß die Druckregeleinheiten durch stromgeregelte Überdruckventile gebildet sind.

Im Rahmen der vorliegenden Erfindung wird schließlich auch ein Verfahren zum Überprüfen der Betriebsfähigkeit der hydraulischen Energieversorgungseinheit vorgeschlagen, das darin besteht, daß bei jedem Aufladevorgang des Hochdruckspeichers die Aufladezeit gemessen und mit einem Aufladezeit-Sollwert verglichen wird, wobei bei Abweichung von einem vorgegebenen Differenzwert eine Anzeige ausgelöst wird.

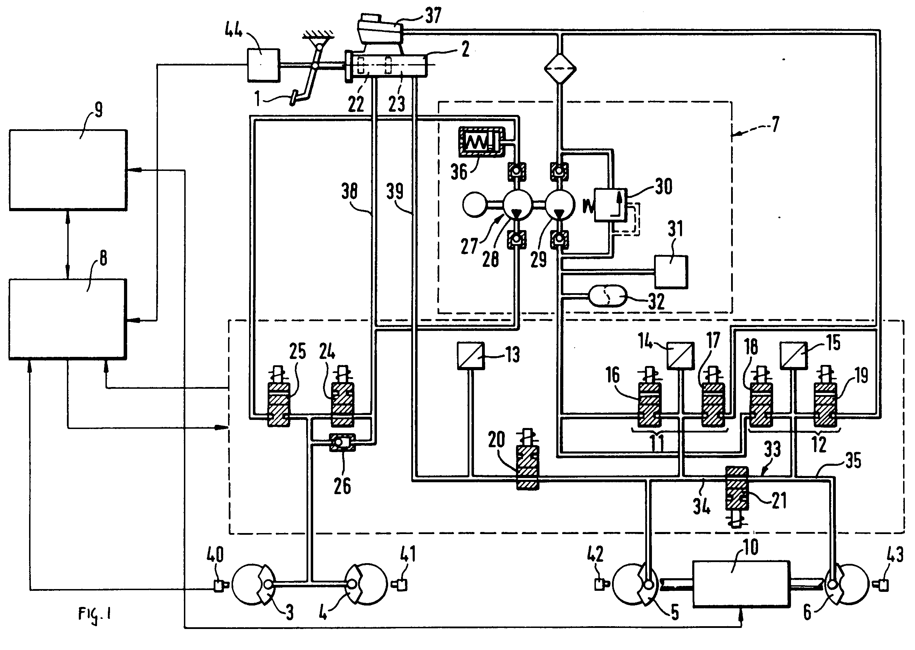

Die Erfindung wird in der nachfolgenden Beschreibung eines Ausführungsbeispiels unter Bezugnahme auf die einzige Figur der beiliegenden Zeichnung näher erläutert, die ein Schaltbild der erfindungsgemäßen Bremsanlage zeigt.

Die in der Zeichnung dargestellte Bremsanlage nach der Erfindung ist für ein Fahrzeug mit Vorderradantrieb vorgesehen. Sie besteht aus einem, mittels eines Bremspedals 1 betätigbaren, zweikreisigen Druckgeber bzw. Tandemhauptzylinder 2, an dessen Druckräume 22,23 über hydraulische Leitungen 38,39 hydraulische Reibungsbremsen 3,4,5,6 angeschlossen sind. Die an den ersten Druckraum 22 angeschlossenen Reibungsbremsen 3,4 sind dabei vorzugsweise den Rädern der nicht angetriebenen Fahrzeugachse, ggf. der Hinterachse zugeordnet, während die an den zweiten Druckraum 23 angeschlossenen Reibungsbremsen 5,6 auf die Räder der Vorderachse wirken, die durch einen elektrischen Antriebsmotor 10 angetrieben werden, der im Generatorbetrieb ein Bremsmoment erzeugen kann. Die erfindungsgemäße Bremsanlage stellt somit ein Verbundbremssystem dar, das ein rekuperatives und reibungsbehaftetes Bremsen ermöglicht.

Für diesen Zweck ist der elektrische Antriebsmotor 10 an ein elektronisches Steuergerät 9 angeschlossen, dem Steuersignale eines elektronischen Reglers 8 zugeführt werden, der gemäß eines Fahrerverzögerungswunsches die Zusammenwirkung der hydraulischen Reibungsbremsen 5,6 mit dem elektrischen Antriebsmotor 10 in Abhängigkeit von Ausgangssignalen eines vom Bremspedal 1 betätigbaren Bremslichtschalters 44 sowie eines ersten Drucksensors 13 steuert, der einen, dem Fahrerwunsch entsprechenden, im zweiten Druckraum 23 des Tandemhauptzylinders 2 herrschenden hydraulischen Druck erfaßt. In die hydraulische Leitung 39 ist dabei vorzugsweise ein elektrisch umschaltbares hydraulisches Sperrventil 20 eingefügt, das ein Absperren des zweiten Druckraumes 23 bzw. eine Trennung der Reibungsbremsen 5,6 vom Tandemhauptzylinder 2 ermöglicht.

Um die auf die angetriebene Fahrzeugachse wirkenden Reibungsbremsen 5,6 zu betätigen bzw. die angetriebenen Räder der Vorderachse zusätzlich hydraulisch abbremsen zu können, ist eine hydraulische Energieversorgungseinheit bzw. Hilfsdruckquelle 7 vorgesehen, die im wesentlichen durch ein zweikreisiges Motor-Pumpen-Aggregat 27 gebildet ist. Um eine ABS-Regelung an der nicht angetriebenen Fahrzeugachse durchzuführen, ist der erste Kreis 28 des Motor-Pumpen-Aggregats 27 an eine, den Reibungsbremsen 3,4 vorgeschaltete Ventilanordnung angeschlossen, die aus einem stromlos offenen (SO) (Einlaß-)-Ventil 24, einem ihm parallel geschalteten Rückschlagventil 26 sowie einem stromlos geschlossenen (SG) (Auslaß-)-Ventil 25 besteht, wobei das letztgenannte Ventil 25 an einen an der Saugseite des ersten Pumpenkreises 28 angeordneten Niederdruckspeicher 36 angeschlossen ist, der in einem ABS-Regelfall das rückgeförderte Druckmittelvolumen aufnimmt.

Der an einen am Tandemhauptzylinder 2 angeordneten Druckmittelvorratsbehälter 37 einerseits angeschlossene zweite Kreis 29 des Motor-Pumpen-Aggregats 27 ist andererseits an eine zwischen den Reibungsbremsen 5,6 der angetriebenen Fahrzeugachse vorgesehene hydraulische Verbindung 33 angeschlossen, die mittels eines elektrisch umschaltbaren zweiten Sperrventils 21 absperrbar ist. Der Anschluß erfolgt dabei vorzugsweise über je eine jeder Reibungsbremse 5,6 zugeordnete Druckregeleinheit 11,12, die an die zwischen der jeweiligen Reibungsbremse 5 bzw. 6 und dem zweiten Sperrventil 21 liegenden Abschnitte 34,35 der hydraulischen Verbindung 33 angeschlossen sind, wobei an die gleichen Abschnitte 34,35 zwei weitere Drucksensoren 14,15 angeschlossen sind, die die in der Reibungsbremse 5 bzw. 6 angesteuerten Drücke überwachen. Da auch das zweite Sperrventil 21 als ein stromlos offenes (SO)-Ventil ausgeführt ist, können beide Drucksensoren 14,15, die zur Druckregelung an der angetriebenen Achse verwendet werden, in jedem Druckzustand gegenseitig überwacht werden. Die Druckregeleinheiten 11,12 sind dabei durch je ein Paar stromlos geschlossener, schnell schaltender Hydraulikventile 16,17 und 18,19 gebildet, von denen die Ventile 16 und 18 die Funktion der Einlaßventile erfüllen, während die Ventile 17 bis 19 als Auslaßventile verwendet werden.

Der zweite Kreis 29 des Motor-Pumpen-Aggregats 27 beinhaltet außerdem einen mittels eines Druckwarnschalters 31 drucküberwachten Hochdruckspeicher 32, beispielsweise einen Gasdruckspeicher, der von der zweiten Stufe des Motor-Pumpen-Aggregats 27 aufgeladen wird. Der maximale Druck wird dabei durch ein Druckbegrenzungsventil 30 begrenzt.

Wird nun ein Bremsvorgang durch Niederdrücken des Bremspedals 1 eingeleitet, bei dem beispielsweise nur 30% der Gesamtbremswirkung benötigt werden, die alleine durch den elektrischen Antriebsmotor 10 aufgebracht werden können, so wird der Betätigungszustand des Bremspedals 1 vom Bremslichtschalter 44 erkannt und dem elektronischen Regler 8 mitgeteilt, dessen Steuersignale ein Umschalten des ersten Sperrventils 20 und dadurch ein Absperren des zweiten Druckraums 23 des Tandemhauptzylinders 2 bewirken. Durch den ersten Drucksensor 13 erfolgt somit eine zweite Meldung des Fahrerverzögerungswunsches an den Regler 8, der mit der darin installierten Bremskraftverteilung das gewünschte Bremsmoment an der Vorderachse errechnet. Das errechnete Bremsmoment wird dem Steuergerät 9 zugeführt, das den elektrischen Antriebsmotor 10 in den Bremsmodus umschaltet, in dem er in der Lage ist, eine Abbremsung der angetriebenen Räder durchzuführen. Eine Abbremsung der nicht angetriebenen Räder erfolgt in konventioneller Art durch den Druckaufbau im ersten Druckraum 22 des Tandemhauptzylinders 2 bzw. (über das offene SO-Einlaßventil 24) in den Reibungsbremsen 3,4.

Zeigt der Drucksensor 13 an, daß eine größere Bremswirkung vom Fahrer gewünscht wird als vom Antriebsmotor 10 erbracht wird, so muß die fehlende Differenz zwischen dem gewünschten und dem vom Antriebsmotor 10 aufgebrachten Bremsmoment (das über das Steuergerät 9 dem elektronischen Regler 8 zurückgemeldet wird), über Einregelung des entsprechenden hydraulischen Druckes an den Reibungsbremsen 5,6 der Vorderachse eingestellt werden.

Dies geschieht durch Schalten der Druckregeleinheit 11,12. Ein Druckaufbau wird durch Umschalten der stromlos geschlossenen (SG) Einlaßventile 16,18 bei geschlossenen Auslaßventilen 17,19 durchgeführt. Ein Druckabbau erfolgt durch kurzzeitiges Öffnen der stromlos geschlossenen (SG) Auslaßventile 17,19, die zwischen der entsprechenden Reibungsbremse 5,6 und dem Druckmittelvorratsbehälter 37 angeordnet sind. Zur Radbremsdruckregelung wird der Druck an beiden angetriebenen Rädern mittels der Drucksensoren 14,15 gemessen, deren Signale im elektronischen Regler 8 verarbeitet werden. Zum Einregeln des gewünschten Druckverlaufs werden jeweils beide Ein- und Auslaßventile 16,18,17,19 als schnellschaltende Regelventile in Auf- und Zu-Stellung betrieben, wobei die Schaltzeiten im Millisekundenbereich liegen. Der maximale Druckgradient wird durch den Strömungswiderstand der geöffneten Ventile 16,17,18,19 begrenzt.

Um bei der Druckregelung an der angetriebenen Fahrzeugachse flache Druckanstiegs und -abfallgradienten zu realisieren, werden im Normalbremsfall beide auf die Vorderachse wirkenden Reibungsbremsen 5,6 gleichzeitig durch nur eine Druckregeleinheit 11 bzw 12 betätigt, während die andere Druckregeleinheit 12 bzw. 11 im Druckhaltezustand verharrt. Steile Druckanstiegs- und -abfallgradienten werden dagegen realisiert, wenn beide Reibungsbremsen im Normalbremsfall gleichzeitig durch beide Druckregeleinheiten 11,12 betätigt werden.

Eine alternative Druckregelung, die sich durch einen kontinuierlich veränderbaren Druckauf- und -abbau auszeichnet, kann mit leicht modifizierten Ein- und Auslaßventilen 16,17,18,19 realisiert werden, bei denen über den elektrischen Erregerstrom eine einstellbare Überdruckcharakteristik erzeugt wird.

Das zweite, stromlos offene (SO) Sperrventil 21, das in der hydraulischen Verbindung 33 zwischen den beiden Reibungsbremsen 5,6 eingefügt ist, bleibt offen, wodurch jederzeit ein Druckausgleich zwischen den Reibungsbremsen 5,6 möglich ist.

Eine ABS-Regelung wird dreikanalig (Vorderachse: zweikanalig, Hinterachse: einkanalig) mit vier Raddrehzahlsensoren 40,41,42,43 durchgeführt, wobei die Bremsdruckmodulation an der Hinterachse nach dem "select-low"-Prinzip erfolgt.

Droht an der angetriebenen Vorderachse ein Rad zu blockieren, so wird vom elektronischen Regler 8 die Bremsmomentanforderung an den elektrischen Antriebsmotor 10 zurückgenommen und die ABS-Regelung von den Reibungsbremsen 5,6 übernommen. Dazu wird das zweite Sperrventil 21 geschlossen, um damit eine radindividuelle Druckregelung zu ermöglichen.

Droht beim Antreiben des Fahrzeuges eines der angetriebenen Räder durchzudrehen, so werden beide Sperrventile 20,21 geschlossen, um eine radindividuelle ASR-Regelung mit den hydraulisch betätigten Reibungsbremsen 5,6 durchzuführen. Droht auch das zweite Rad durchzudrehen, so wird eine entsprechende Antriebsmomentreduzierung vom Steuergerät 9 angefordert.

Bei einem Ausfall der Elektronik/Elektrik gehen alle Ventile in den stromlosen Zustand. Dabei werden beide der angetriebenen Fahrzeugachse zugeordneten Reibungsbremsen 5,6 über die stromlos offenen Sperrventile 20,21 mit dem Tandemhauptzylinder 2 verbunden, so daß die gesetzlich geforderten Bestimmungen bei Ausfall der Elektronik erfüllt werden.

Bei einem hydraulischen Ausfall eines Bremskreises kann immer mit dem zweiten Kreis die gesetzlich geforderte Bremswirkung erreicht werden. Bei Ausfall des der Hinterachse zugeordneten hydraulischen Kreises 38 ist durch Anordnung des ersten Drucksensors 13 im zweiten Bremskreis 39 sichergestellt, daß über die angetriebene Vorderachse die Bremswirkung "brake-by-wire" erreicht wird.

Bei einem hydraulischen Ausfall des der Vorderachse zugeordneten Bremskreises 39 kann der Fahrer über den der nicht angetriebenen Hinterachse zugeordneten Kreis 38 die Bremswirkung erreichen.

## Patentansprüche

1. Bremsanlage für Kraftfahrzeuge mit elektrischem Antrieb und einer angetriebenen und einer nicht angetriebenen Achse, bestehend aus
a) einem mittels eines Bremspedals (1) betätigbaren zweikreisigen Hauptbremszylinder (2), an den sowohl auf die angetriebene als auch auf die nicht angetriebene Achse wirkende Reibungsbremsen (3,4,5,6) angeschlossen sind;
b) einem elektro-regenerativen Bremssystem, das den elektrischen Antriebsmotor (10) des Kraftfahrzeuges zur Abbremsung und Energierückgewinnung nutzt;
sowie
c) einem elektronischen Regler (8), der Informationen über den Betätigungszustand des Druckgebers (2), den durch die Betätigung hervorgerufenen Bremsdruck und die Fahrzeuggeschwindigkeit erhält und zur Steuerung sowohl des Antriebsmotors (10) als auch der auf die angetriebene Achse wirkenden Reibungsbremsen (5,6) auswertet,
dadurch **gekennzeichnet**, daß die auf die nicht angetriebene Achse wirkenden Reibungsbremsen (3,4) an den ersten Druckraum (22) des Hauptbremszylinders (2) und die auf die angetriebene Achse wirkenden Reibungsbremsen (5,6) an den zweiten Druckraum (23) des Hauptbremszylinders (2) angeschlossen sind, wobei die Verbindung zwischen dem zweiten Druckraum (23) und den auf die angetriebene Achse wirkenden Reibungsbremsen (5,6) über mindestens ein elektrisch umschaltbares, stromlos offenes Sperrventil (20) erfolgt und die auf die angetriebene Achse wirkenden Reibungsbremsen (5,6) über elektrisch umschaltbare Druckregeleinheiten (11,12) an eine hydraulische Energieversorgungseinheit bzw. Hilfsdruckquelle (7) anschließbar sind.

2. Bremsanlage nach Anspruch 1, dadurch **gekennzeichnet,** daß zwischen den auf die angetriebene Achse wirkenden Reibungsbremsen (5,6) eine hydraulische Verbindung (33) vorgesehen ist, die mittels eines zweiten elektrisch umschaltbaren Sperrventils (21) absperrbar ist.

3. Bremsanlage nach Anspruch 2, dadurch **gekennzeichnet,** daß das zweite Sperrventil (21) als stromlos offenes (S0) Ventil ausgeführt ist.

4. Bremsanlage nach einem der vorhergehenden Ansprüche 1 bis 3, dadurch **gekennzeichnet,** daß an den zweiten Druckraum (23) des Tandemhauptzylinders (2) ein Drucksensor (13) angeschlossen ist, der eine Fahrerbremsenwunscherkennung ermöglicht.

5. Bremsanlage nach einem der Ansprüche 1 bis 4, dadurch **gekennzeichnet,** daß die hydraulische Energieversorgungseinheit (7) durch ein zweikreisiges Motor-Pumpen-Aggregat (27) gebildet ist, dessen erster Kreis (28) über eine hydraulische Ventilanordnung (24,25,26) mit den auf die nicht angetriebene Achse wirkenden Reibungsbremsen (3,4) verbindbar ist und dessen zweiter Kreis (29) mit einem Hochdruckspeicher (32) verbunden ist, der über je eine Druckregeleinheit (11,12) an die auf die angetriebene Achse wirkenden Reibungsbremsen (5,6) anschließbar ist.

6. Bremsanlage nach Anspruch 2, wobei den hydraulischen Druck in den auf die angetriebene Achse wirkenden Reibungsbremsen erfassende Drucksensoren vorgesehen sind, dadurch **gekennzeichnet,** daß die Drucksensoren (14,15) an die zwischen den Reibungsbremsen (5,6) und dem zweiten Sperrventil (21) liegenden Abschnitte (34,35) der hydraulischen Verbindung (33) angeschlossen sind.

7. Bremsanlage nach Anspruch 2 und 5, dadurch **gekennzeichnet,** daß die Druckregeleinheiten (11,12) an die zwischen den Reibungsbremsen (5,6) und dem zweiten Sperrventil (21) liegenden Abschnitte (34,35) der hydraulischen Verbindung (33) angeschlossen sind.

8. Bremsanlage nach Anspruch 5 oder 7, dadurch **gekennzeichnet,** daß die Druckregeleinheiten (11,12) durch stromgeregelte Überdruckventile gebildet sind.

9. Verfahren zum Überprüfen der Betriebsfähigkeit der hydraulischen Energieversorgungseinheit (7) bei der Bremsanlage nach Anspruch 5, dadurch **gekennzeichnet,** daß bei jedem Aufladevorgang des Hochdruckspeichers (32) die Aufladezeit gemessen und mit einem Aufladezeit-Sollwert verglichen wird, wobei bei Abweichung von einem vorgegebenen Differenzwert eine Anzeige ausgelöst wird.

## Claims

1. Brake unit for motor vehicles with electric drive and with a driven axle and a non-driven axle, comprising:
a) a two-circuit master brake cylinder (2), which can be actuated by means of a brake pedal (1), and to which both the friction brakes (3, 4, 5, 6) associated with the driven axle and with the non-driven axle are connected;
b) an electro-regenerative brake system which uses the electric drive motor (10) of the motor vehicle for braking and energy recovery;
and
c) an electronic controller (8), which receives information on the state of actuation of the master brake cylinder (2), on the brake pressure brought about by the actuation and on the velocity of the vehicle, and evaluates it to control both the drive motor (10) and the friction brakes (5, 6) acting on the driven axle,
**characterized** in that the friction brakes (3, 4) acting on the non-driven axle are connected to the first pressure space (22) of the master brake cylinder (2) and the friction brakes (5, 6) acting on the driven axle are connected to the second pressure space (23) of the master brake cylinder (2), wherein the connection between the second pressure space (23) and the friction brakes (5, 6) acting on the driven axle is performed by at least one shut-off valve (20), which can be switched over electrically and is open in the currentless state, and the friction brakes (5, 6) acting on the driven axle are connectable to a hydraulic energy supply unit or auxiliary pressure source (7) by way of electrically commutable pressure control units (11, 12).

2. Brake unit as claimed in claim 1,
**characterized** in that a hydraulic connection (33), which can be shut off by means of an electrically commutable second shut-off valve (21), is provided between the friction brakes (5, 6) acting on the driven axle.

3. Brake unit as claimed in claim 2,
**characterized** in that the second shut-off valve (21) is designed as a valve which is open in the currentless state (CO).

4. Brake unit as claimed in any one of the preceding claims 1 to 3,
**characterized** in that a pressure sensor (13), which makes possible the recognition of the driver's wish to brake, is connected to the second pressure space (23) of the tandem master cylinder (2).

5. Brake unit as claimed in any one of claims 1 to 4,
**characterized** in that the hydraulic energy supply unit (7) is formed by a two-circuit motor-pump unit (27), the first circuit (28) of which can be connected to the friction brakes (3, 4) acting on the non-driven axle by way of a hydraulic valve arrangement (24, 25, 26), and the second circuit (29) of which is connected to a high-pressure accumulator (32), which can be connected to the friction brakes (5, 6) acting on the driven axle by way of a respective pressure control unit (11, 12).

6. Brake unit as claimed in claim 2, wherein pressure sensors detecting the hydraulic pressure in the friction brakes acting on the driven axle are provided,
**characterized** in that the pressure sensors (14, 15) are connected to the sections (34, 35) of the hydraulic connection (33), which are located between the friction brakes (5, 6) and the second shut-off valve (21).

7. Brake unit as claimed in claims 2 and 5,
**characterized** in that the pressure control units (11, 12) are connected to the sections (34, 35) of the hydraulic connection (33) which are located between the friction brakes (5, 6) and the second shut-off valve (21).

8. Brake unit as claimed in claim 5 or 7,
**characterized** in that the pressure control units (11, 12) are formed by current-controlled pressure relief valves.

9. Process for checking the ability of the hydraulic energy supply unit (7) to operate in the brake unit as claimed in claim 5,
**characterized** in that the charging time is measured during each charging process of the high-pressure accumulator (32) and is compared with a charging time desired value, and a display is triggered in case of a deviation from a preset difference value.

## Revendications

1. Système de freinage, pour véhicule automobile à propulsion électrique et comportant un essieu moteur et un essieu non moteur, constitué :
a) d'un maître-cylindre de frein (2) à deux circuits qui est agencé de façon à pouvoir être actionné au moyen d'une pédale de frein (1) et auquel sont raccordés aussi bien les freins à friction (5, 6) agissant sur l'essieu moteur que ceux (3, 4) agissant sur l'essieu non moteur,
b) d'un système de freinage à électro-régénération qui utilise le moteur d'entraînement électrique (10) du véhicule automobile pour le freinage et la récupération d'énergie et
c) d'un régulateur électronique (8) qui reçoit des informations concernant l'état d'actionnement du générateur de pression (2), la pression de freinage créée par l'actionnement et la vitesse du véhicule et les exploite pour commander aussi bien le moteur d'entraînement (10) que les freins à friction (5, 6) agissant sur l'essieu moteur, caractérisé en ce que les freins à friction (3, 4) agissant sur l'essieu non moteur sont raccordés à la première chambre de pression (22) du maître-cylindre de frein (2) et les freins à friction (5, 6) agissant sur l'essieu moteur sont raccordés à la seconde chambre de pression (23) du maître-cylindre de frein (2), la liaison entre la seconde chambre de pression (23) et les freins à friction (5, 6) agissant sur l'essieu moteur s'effectuant par l'intermédiaire d'au moins une valve de blocage (20) à commutation électrique et ouverte en l'absence de courant, tandis que les freins à friction (5, 6) agissant sur l'essieu moteur peuvent être raccordés à une source de pression auxiliaire (7) ou unité d'alimentation en énergie hydraulique par l'intermédiaire d'unités de régulation de pression (11, 12) à commutation électrique.

2. Système de freinage selon la revendication 1, caractérisé en ce qu'il est prévu, entre les freins à friction (5, 6) agissant sur l'essieu moteur, une liaison hydraulique (33) qui est agencée de façon à pouvoir être bloquée au moyen d'une seconde valve de blocage (21) à commutation électrique.

3. Système de freinage selon la revendication 2, caractérisé en ce que la seconde valve de blocage (21) est réalisée sous forme d'une valve ouverte en l'absence de courant (SO).

4. Système de freinage selon l'une des revendications précédentes 1 à 3, caractérisé en ce qu'un capteur de pression (13), qui permet une reconnaissance de désir de freinage du conducteur, est raccordé à la seconde chambre de pression (23) du maître-cylindre tandem (2).

5. Système de freinage selon l'une des revendications 1 à 4, caractérisé en ce que l'unité d'alimentation en énergie hydraulique (7) est formée d'un groupe motopompe (27) à deux circuits dont le premier circuit (28) est agencé de façon à pouvoir être relié aux freins de friction (3, 4) agissant sur l'essieu non moteur, par l'intermédiaire d'un agencement de valve hydraulique (24, 25, 26), et dont le second circuit (29) est relié à un accumulateur à haute pression (32) qui est agencé de façon à pouvoir être raccordé à chacun dez deux freins à friction (5, 6) agissant sur l'essieu moteur, par l'intermédiaire d'une unité de régulation de pression (11, 12) respective.

6. Système de freinage selon la revendication 2, dans lequel il est prévu des capteurs de pression relevant la pression hydraulique dans les freins à friction agissant sur l'essieu moteur, caractérisé en ce que les capteurs de pression (14, 15) sont raccordés aux tronçons (34, 35) de la liaison hydraulique (33) qui sont situés entre les freins à friction (5, 6) et la seconde valve de blocage (21).

7. Système de freinage selon les revendications 2 et 5, caractérisé en ce que les unités de régulation de pression (11, 12) sont raccordées aux tronçons (34, 35) de la liaison hydraulique (33) qui sont situés entre les freins à friction (5, 6) et la seconde valve de blocage (21).

8. Système de freinage selon la revendication 5 ou 7, caractérisé en ce que les unités de régulation de pression (11, 12) sont formées de valves de surpression à régulation en courant.

9. Procédé de surveillance de la capacité de fonctionnement de l'unité d'alimentation en énergie hydraulique (7) dans le système de freinage selon la revendication 5, caractérisé en ce qu'à l'occasion de chaque opération de remplissage de l'accumulateur à haute pression (32), le temps de remplissage est mesuré et est comparé à une valeur de consigne de temps de remplissage, une signalisation étant déclenchée en cas d'écart vis-à-vis d'une valeur de différence préfixée.
